# FASCICULE DE BREVET EUROPEEN

(11) **EP 2 995 558 B1**
(45) Date de publication et mention de la délivrance du brevet: **05.12.2018**
(21) Numéro de dépôt: 15184255.6
(22) Date de dépôt: 08.09.2015
(51) Int. Cl.: B64D 45/00, B64D 25/20, B64D 47/06, G01S 5/02

(54) **AERONEF COMPORTANT AU MOINS UNE BALISE DE SECOURS**
LUFTFAHRZEUG, DAS MINDESTENS EINEN NOTSIGNALSENDER UMFASST
AIRCRAFT COMPRISING AT LEAST ONE RESCUE BEACON

(30) Priorité: 12.09.2014 FR 1458590
(43) Date de publication de la demande: 16.03.2016
(73) Titulaire: AIRBUS (SAS), 31000 Toulouse (FR)
(72) Inventeur: FONTAINE, Alain, 31100 TOULOUSE (FR); CROS, Christophe, 31240 L'UNION (FR)
(74) Mandataire: Gicquel, Olivier Yves Gérard

(56) Documents cités:
- GB-A- 796 264
- US-A- 2 160 974
- US-A- 2 628 307
- US-A- 2 836 143
- US-A- 2 966 674
- US-A- 3 140 847
- US-B1- 8 670 879

## Description

La présente invention concerne un aéronef comportant au moins une balise de secours, ainsi qu'une telle balise de secours.

Chaque aéronef est actuellement équipé d'une balise radio qui émet un signal de détresse lorsqu'un problème survient sur l'aéronef.

Une telle balise radio est prévue pour émettre un signal pouvant être capté par les services de secours du monde entier.

Une telle balise radio est installée dans le fuselage de l'aéronef et émet son signal par l'intermédiaire d'une antenne.

Lors d'un atterrissage de détresse ou lorsque l'aéronef est immergé, l'antenne et la balise radio peuvent subir des dégâts qui les rendent inopérantes.

Le document US8,670,879 décrit un dispositif destiné à contenir un enregistreur de données de vol dans un avion. Un tel dispositif comprend un boîtier qui définit un compartiment dans le fuselage renfermant l'enregistreur de données de vol et un dispositif de flottaison encapsulant l'enregistreur de données de vol.

L'installation d'un tel dispositif requiert la modification du fuselage qui peut être endommagé en cas d'éjection du dispositif.

Une autre solution, décrite dans le brevet FR-A-2 968 276, consiste en une balise radio qui s'éjecte à travers le fuselage en le transperçant lorsqu'un incident est détecté. La balise radio se retrouve alors à l'extérieur de l'aéronef et en cas d'immersion, elle remonte à la surface pour émettre un signal de détresse plus facilement localisable.

Or, il peut arriver qu'une fausse alerte déclenche la balise radio, ce qui entraîne le perçage du fuselage et nécessite alors de lourdes réparations.

Un objet de la présente invention est de proposer un aéronef comportant une balise de secours qui ne présente pas les inconvénients de l'art antérieur, et en particulier dans lequel la balise de secours est prévue pour ne pas entraîner de destruction au niveau de la structure de l'aéronef lorsqu'elle est déclenchée et où son installation ne nécessite aucune modification de la structure de l'aéronef.

A cet effet, est proposé un aéronef comportant:
- un fuselage présentant une face extérieure sur laquelle est fixée une deuxième interface,
- au moins une balise de secours comportant :
- une base présentant une première interface prévue pour coopérer avec ladite deuxième interface afin d'assurer la fixation de la base sur ladite face extérieure, et
- un boîtier dans lequel logent au moins les composants électroniques suivant une unité de contrôle, un émetteur radio apte à émettre un signal radio de détresse et des moyens de détection prévus pour détecter un comportement anormal de l'aéronef, et
- des moyens de fixation prévus pour prendre une position de fixation dans laquelle les moyens de fixation assurent la fixation du boîtier sur la base ou une position de séparation, dans laquelle les moyens de fixation n'assurent pas la fixation du boîtier sur la base, le passage de la position de fixation à la position de séparation étant commandé par ladite unité de contrôle lorsque les moyens de détection détectent un comportement anormal, et
où la deuxième interface est une interface physique prévue pour recevoir une lampe de navigation, où la première interface est une interface physique similaire à celle de ladite lampe de navigation et où la base comporte une interface de montage prévue pour recevoir une lampe de navigation.

Une telle balise de secours est donc éjectée de l'aéronef à partir de son implantation extérieure lorsqu'un incident est détecté et la structure de l'aéronef n'est alors pas détériorée même en cas de fausse alerte et son positionnement en lieu et place d'une lampe de navigation évite de modifier la structure de l'aéronef.

Avantageusement, le boîtier comporte une source d'énergie électrique.

Avantageusement, le boîtier est équipé d'un coussin gonflable prévu pour se gonfler autour du boîtier.

Avantageusement, le boîtier comporte un parachute prévu pour être déployé sous contrôle de l'unité de contrôle après la séparation.

Avantageusement, l'aéronef comporte un réseau électrique prévu pour alimenter les composants électroniques depuis une source d'énergie localisée dans l'aéronef.

Avantageusement, la ou au moins l'une des balises de secours est disposée à l'arrière du fuselage.

Avantageusement, l'unité de contrôle comporte une zone mémoire dans laquelle est stockée une cartographie de la terre et une base de données qui recense des valeurs seuils de sécurité liées à des paramètres de l'aéronef et fonction de la cartographie, l'unité de contrôle comporte des logiciels de traitement de données aptes à comparer les données transmises par les moyens de détection aux données de la base de données, et à déclencher les moyens de fixation en fonction de ces comparaisons.

Avantageusement, l'unité de contrôle comporte une première sous-unité et une deuxième sous-unité, chaque sous-unité comporte:
- un premier module prévu pour délivrer un premier signal électrique aux moyens de fixation à travers une première connexion filaire, et
- un deuxième module prévu pour délivrer un deuxième signal électrique aux moyens de fixation à travers une deuxième connexion filaire, et
pour chaque module, il est prévu des moyens de détection connectés audit module et différents de ceux des autres modules.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de côté d'un aéronef selon l'invention,
la Fig. 2 est un agrandissement de l'arrière du fuselage de l'aéronef de la Fig. 1 au niveau de son empennage,
la Fig. 3 est une schématique d'une balise de secours selon l'invention, et
la Fig. 4 montre un mode de réalisation particulier d'une unité de contrôle pour une balise de secours selon l'invention.

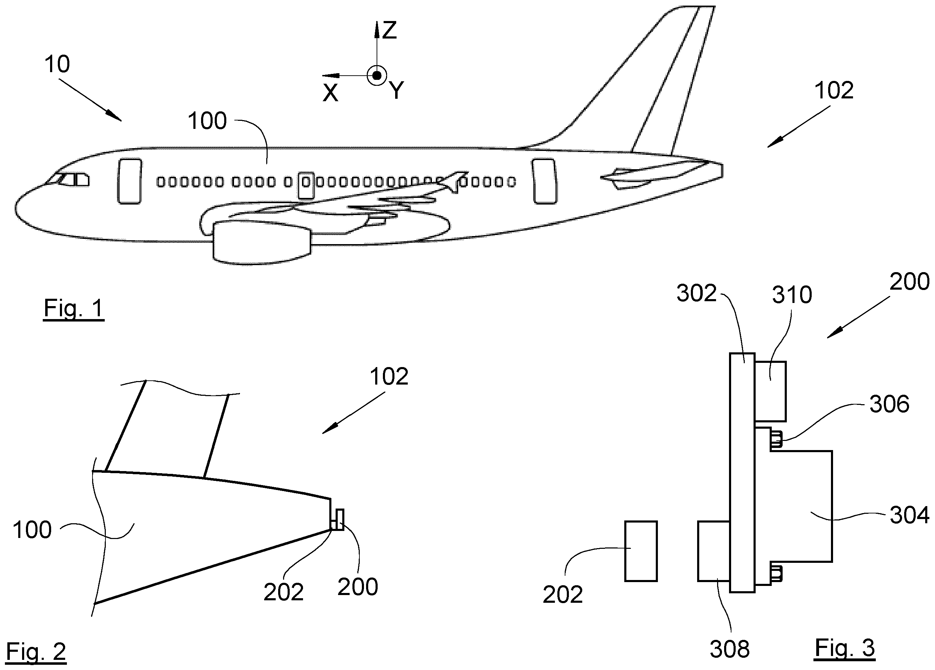

La Fig. 1 montre un aéronef 10 comportant un fuselage 100 présentant un axe longitudinal noté X, un axe s'étendant horizontalement et latéralement et noté Y et un axe s'étendant verticalement et noté Z. L'axe longitudinal X est orienté selon la direction d'avancement de l'aéronef 10.

A l'arrière, le fuselage 100 présente un cône 102 au niveau duquel est généralement disposé un groupe auxiliaire de puissance.

La Fig. 2 montre le cône 102 à l'arrière duquel est fixée une balise de secours 200 selon l'invention. Dans le reste de la description, il est fait mention d'une seule balise de secours 200, mais il pourrait y en avoir plusieurs réparties à différents endroits du fuselage 100 et donc plus généralement au moins une.

La Fig. 3 montre un exemple de la balise de secours 200 qui est ici dissociée du fuselage 100. La balise de secours 200 comporte une base 302 qui est fixée contre une face extérieure du fuselage 100.

La balise de secours 200 comporte également un boîtier 304 dans lequel sont logés différents composants électroniques nécessaires à son fonctionnement. En particulier, dans le boîtier 304 sont logés au moins les composants électroniques suivant une unité de contrôle, un émetteur radio apte à émettre un signal radio de détresse et des moyens de détection prévus pour détecter un comportement anormal de l'aéronef 10.

Les moyens de détection embarqués dans la balise de secours 200 rendent cette balise de secours 200 indépendante des actions des personnels de bord de l'aéronef 10.

Le boîtier 304 est fixé sur la base 302 par l'intermédiaire de moyens de fixation 306 prévus pour prendre une position de fixation ou une position de séparation. Dans la position de fixation, les moyens de fixation 306 assurent la fixation du boîtier 304 sur la base 302 et dans la position de séparation les moyens de fixation 306 n'assurent pas la fixation du boîtier 304 sur la base 302 et le boîtier 304 se désolidarise alors de ladite base 302. Le boîtier 304 est ainsi monté de manière amovible sur la base 302.

Pour protéger les composants électroniques qu'il contient, le boîtier 304 est de préférence étanche à l'eau et à la poussière et il protège ces composants électroniques en particulier de la chaleur et des chocs.

En variante, le boîtier 304 peut comporter une protection thermique sous la forme d'un revêtement en un matériau isolant thermiquement tel que du plastique ou du caoutchouc.

Le passage de la position de fixation à la position de séparation est déclenché par une commande de l'unité de contrôle lorsque les moyens de détection détectent un comportement anormal de l'aéronef 10.

Ainsi, en fonctionnement normal, les moyens de fixation 306 restent en position de fixation et le boîtier 304 reste alors solidaire de la base 302 et à l'extérieur du fuselage 100. En fonctionnement de sécurité, lorsque les moyens de détection détectent une anomalie, ils en informent l'unité de contrôle qui commande le passage des moyens de fixation 306 en position de séparation et le boîtier 304 se désolidarise alors de la base 302 et se sépare du fuselage 100.

La fixation de la base 302 sur le fuselage 100 s'effectue à l'aide d'interfaces adaptées. Ainsi, la base 302 présente une première interface 308 et une deuxième interface 202 et est fixée sur le fuselage 100. Les deux interfaces 202 et 308 sont prévues pour coopérer afin d'assurer la fixation de la base 302 sur la face extérieure du fuselage 100.

La deuxième interface 202 prend la forme d'une interface physique prévue pour recevoir une lampe de navigation, et la première interface 308 prend alors la forme d'une interface physique similaire à celle de ladite lampe de navigation et qui est prévue pour coopérer avec l'interface physique de la deuxième interface 202. Ainsi, il est aisé de placer la balise de secours 200 en lieu et place d'une lampe de navigation existante.

Pour assurer la mise en place de la lampe de navigation qui est alors remplacée par la balise de secours 200, la base 302 présente une interface de montage 310 prévue pour recevoir ladite lampe de navigation.

Il est ainsi possible d'équiper les aéronefs 10 déjà existants sans qu'il soit nécessaire de les modifier et dans la mesure où la balise de secours 200, et plus particulièrement le boîtier 304 sont disposés à l'extérieur du fuselage 100, la séparation du boîtier 304 de l'aéronef 10 n'entraîne aucune détérioration dudit fuselage 100.

Une fois séparé, le boîtier 304 peut émettre un signal radio de détresse grâce à l'émetteur radio commandé par l'unité de contrôle.

Pour assurer une certaine autonomie du boîtier 304 lorsqu'il est détaché ou lui permettre de fonctionner sur l'aéronef 10 lorsqu'aucune autre source d'énergie extérieure au boîtier 304 ne l'alimente, le boitier 304 incorpore une source d'énergie électrique, telle qu'une batterie.

Les moyens de fixation 306 sont de préférence des moyens pyrotechniques ou chimiques, comme par exemple du type boulons explosifs dont l'explosion est commandée par l'unité de contrôle.

Selon un mode de réalisation préféré, l'unité de contrôle comporte une zone mémoire dans laquelle est stockée une cartographie de la terre, le plan de vol, et un processeur contenant au moins un logiciel de traitement de données.

Dans la zone mémoire est également stockée une base de données associée à la cartographie qui recense des valeurs seuils de sécurité liées à des paramètres de l'aéronef 10 et fonction de la cartographie comme par exemple l'altitude de survol, la vitesse, l'accélération, la variation d'altitude etc. en fonction de la position (longitude, latitude) de l'aéronef 10.

Les logiciels de traitement de données sont aptes à comparer les données transmises par les moyens de détection aux données de la base de données, et à déclencher les moyens de fixation 306 en fonction de ces comparaisons.

L'un des logiciels peut être un logiciel d'enregistrement prévu pour enregistrer régulièrement les données transmises par les moyens de détection dans la zone mémoire afin de retracer un historique du vol.

Les moyens de détection comportent par exemple un capteur GPS qui, associé à la cartographie de la terre et/ou au plan de vol, peut détecter la position et l'altitude de l'aéronef 10 et en déduire un positionnement inadéquat par comparaison avec les valeurs seuils de sécurité. Par exemple l'aéronef 10 peut être détecté, en dehors des zones aéroportuaires, comme étant trop proche du sol ou de l'eau et l'unité de contrôle peut alors décider de déclencher la balise de secours 200.

Les moyens de détection comportent par exemple un ou des accéléromètres qui peuvent calculer une orientation de l'aéronef 10 et lorsque cette orientation n'est pas conforme aux valeurs seuils de sécurité d'un vol normal et risque de conduire l'aéronef 10 à s'écraser, l'unité de contrôle peut décider de déclencher la balise de secours 200.

De tels moyens de détection peuvent par exemple évaluer l'altitude et l'angle de descente de l'aéronef 10 et si de telles variables ne sont pas conformes à celles du plan de vol, l'unité de contrôle peut décider de déclencher la balise de secours 200.

De tels moyens de détection peuvent par exemple évaluer la vitesse d'approche de l'aéronef 10 en direction du sol, et si cette vitesse est trop importante et que l'aéronef 10 risque de s'écraser, l'unité de contrôle peut décider de déclencher la balise de secours 200.

De tels moyens de détection peuvent par exemple détecter que l'aéronef subit un choc et l'unité de contrôle peut alors décider de déclencher la balise de secours 200.

Pour amortir le choc du boîtier 304 lorsqu'il atteint le sol ou l'eau, le boîtier 304 est équipé d'un coussin gonflable qui est prévu pour se gonfler autour du boîtier 304 sous le contrôle de l'unité de contrôle juste après son détachement de la base 302. Le coussin est par exemple du type coussin à gonflage par réaction chimique explosive. Lorsque le coussin est gonflé, il englobe l'ensemble du boîtier 304 et prend alors par exemple la forme d'une sphère.

Un tel coussin gonflable maintient également à flot le boîtier 304.

Pour éviter que la source d'énergie électrique embarquée dans le boîtier 304 ne se décharge, l'aéronef 10 comporte un réseau électrique prévu pour alimenter les composants électroniques logés dans le boîtier 304 depuis une source d'énergie localisée dans l'aéronef 10. Le réseau électrique comporte des connecteurs électriques et des conducteurs insérés à l'aéronef 10 et à la base 302 afin de permettre l'alimentation électrique des composants électroniques de la balise de secours 200 et éventuellement de la lampe de navigation depuis l'aéronef 10.

En particulier, des connecteurs électriques sont incorporés à la première interface 308, à la deuxième interface 202, et à l'interface de montage 310, et le réseau de conducteurs relie de manière appropriée les différents connecteurs électriques.

L'émission du signal radio de détresse permet par triangulation de connaître la position du boîtier 304 et donc approximativement celle de l'aéronef 10.

Lorsque la balise de secours 200 comporte des moyens permettant de connaître la position géographique du boîtier 304, le signal radio de détresse peut transmettre cette position.

En fonction des moyens de détection contenus dans le boîtier 304, le signal radio de détresse peut transmettre des données de vol antérieures au largage du boîtier 304, comme par exemple l'accélération, la position, la vitesse de l'aéronef 10.

Pour recharger la source d'énergie électrique, le boîtier 304 peut comporter un système de recharge destiné à recharger ladite source d'énergie électrique à partir de l'environnement extérieur. Le système de recharge peut être constitué par exemple de panneaux photovoltaïques, ou un système propre à récupérer l'énergie des vagues et à la transformer en énergie électrique.

Le boîtier 304 peut comporter une interface de connexion filaire ou sans fil, permettant de mettre à jour les logiciels qui sont mis en oeuvre en particulier dans l'unité de contrôle, et la cartographie.

Pour ralentir la descente du boîtier 304 et réduire la force de l'impact avec le terrain (sol ou eau) lorsqu'il est détaché de l'aéronef 10, le boîtier 304 peut comporter un parachute prévu pour être déployé sous contrôle de l'unité de contrôle après le passage en position de séparation.

Au moins l'une des balises 200 est avantageusement disposée à l'arrière du fuselage 10, en particulier dans le mode de réalisation de l'invention décrit ici à l'arrière du cône 102. En effet, lorsque le boîtier 304 se sépare de la base 302, il y a peu de chance qu'il soit endommagé par le reste de l'aéronef 10 qui continue à avancer.

En cas d'incident sur l'une des balises 200, un signal identique à celui correspondant à un défaut de la lampe de navigation qu'il remplace est envoyé à un système de surveillance de l'aéronef.

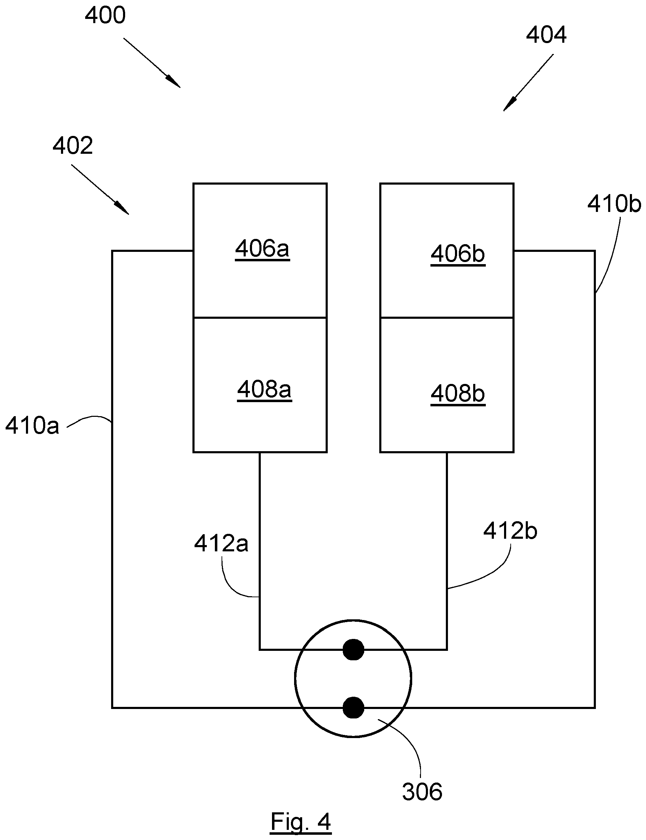

La Fig. 4 montre une unité de contrôle 400 qui comporte une première sous-unité 402 et une deuxième sous-unité 404.

Les moyens de fixation 306 se déclenchent et passent en position de séparation, lorsqu'ils reçoivent le premier signal électrique et le deuxième signal électrique. Un tel arrangement évite que les moyens de fixation 306 se déclenchent sur commande d'un seul signal électrique qui peut être source de déclenchements intempestifs.

Le premier signal électrique est par exemple un signal de +5VDC et le deuxième signal électrique est par exemple un signal de masse.

Selon un mode de réalisation particulier de l'invention, pour chaque module 406a-b, 408a-b, il est prévu des moyens de détection connectés audit module 406a-b, 408a-b et différents de ceux des autres modules 406a-b, 408a-b afin d'assurer une redondance d'informations.

Un tel agencement permet de pallier une défaillance d'au moins deux modules 406a-b, 408a-b de types différents ou de leurs moyens de détection associés et permettre un déclenchement des moyens de fixation 306.

En effet, si l'un des premiers modules 406a-b ou l'un des moyens de détection associés est défaillant, l'autre premier module 406b-a peut délivrer le premier signal aux moyens de fixation 306 lorsque les moyens de détection associés détectent un comportement anormal. De la même manière, si l'un des deuxièmes modules 408a-b ou l'un des moyens de détection associés est défaillant, l'autre deuxième module 408b-a peut délivrer le deuxième signal aux moyens de fixation 306 lorsque les moyens de détection associés détectent un comportement anormal.

Dans de telles conditions, les moyens de fixation 306 recevront au moins un premier signal et au moins un deuxième signal et se déclencheront.

## Revendications

1. Aéronef (10) comportant:
- un fuselage (100) présentant une face extérieure sur laquelle est fixée une deuxième interface (202),
- au moins une balise de secours (200) comportant :
- une base (302) présentant une première interface (308) prévue pour coopérer avec ladite deuxième interface (202) afin d'assurer la fixation de la base (302) sur ladite face extérieure, et
- un boîtier (304) dans lequel logent au moins les composants électroniques suivants : une unité de contrôle, un émetteur radio apte à émettre un signal radio de détresse et des moyens de détection prévus pour détecter un comportement anormal de l'aéronef (10), et
- des moyens de fixation (306) prévus pour prendre une position de fixation dans laquelle les moyens de fixation (306) assurent la fixation du boîtier (304) sur la base (302) ou une position de séparation, dans laquelle les moyens de fixation (306) n'assurent pas la fixation du boîtier (304) sur la base (302), le passage de la position de fixation à la position de séparation étant commandé par ladite unité de contrôle lorsque les moyens de détection détectent un comportement anormal,
**caractérisé en ce que** la deuxième interface (202) est une interface physique prévue pour recevoir une lampe de navigation, où la première interface (308) est une interface physique similaire à l'interface physique de ladite lampe de navigation et où la base (302) comporte une interface de montage (310) prévue pour recevoir une lampe de navigation.

2. Aéronef (10) selon la revendication 1, **caractérisé en ce que** le boîtier (304) comporte une source d'énergie électrique.

3. Aéronef (10) selon l'une des revendications 1 ou 2, **caractérisé en ce que** le boîtier (304) est équipé d'un coussin gonflable prévu pour se gonfler autour du boîtier (304).

4. Aéronef (10) selon l'une des revendications 1 à 3, **caractérisé en ce que** le boîtier (304) comporte un parachute prévu pour être déployé sous contrôle de l'unité de contrôle après un déclenchement des moyens de fixation de la position de fixation à la position de séparation.

5. Aéronef (10) selon l'une des revendications 1 à 4, **caractérisé en ce qu'**il comporte un réseau électrique prévu pour alimenter les composants électroniques depuis une source d'énergie localisée dans l'aéronef (10).

6. Aéronef (10) selon l'une des revendications précédentes, **caractérisé en ce que** la ou au moins l'une des balises de secours (200) est disposée à l'arrière du fuselage (100).

7. Aéronef (10) selon l'une des revendications précédentes, **caractérisé en ce que**
- l'unité de contrôle comporte une zone mémoire dans laquelle est stockée une cartographie de la Terre et une base de données qui recense des valeurs seuils de sécurité liées à des paramètres de l'aéronef (10) et fonction de la cartographie, et **en ce que**
- l'unité de contrôle comporte des logiciels de traitement de données configuré pour comparer les données transmises par les moyens de détection aux données de la base de données, et à déclencher les moyens de fixation (306) en fonction de ces comparaisons.

8. Aéronef (10) selon l'une des revendications précédentes, **caractérisé en ce que** l'unité de contrôle (400) comporte une première sous-unité (402) et une deuxième sous-unité (404), **en ce que** chaque sous-unité (402, 404) comporte:
- un premier module (406a-b) prévu pour délivrer un premier signal électrique aux moyens de fixation (306) à travers une première connexion filaire (410a-b), et
- un deuxième module (408a-b) prévu pour délivrer un deuxième signal électrique aux moyens de fixation (306) à travers une deuxième connexion filaire (412a-b), et
**en ce que**, pour chaque module (406a-b, 408a-b), il est prévu des moyens de détection connectés audit module (406a-b, 408a-b) et différents des moyens détections des autres modules (406a-b, 408a-b).

## Patentansprüche

1. Luftfahrzeug (10), umfassend:
- einen Rumpf (100), der eine Außenseite aufweist, auf der eine zweite Schnittstelle (202) befestigt ist,
- mindestens einen Notsignalsender (200), umfassend:
- eine Basis (302), die eine erste Schnittstelle (308) aufweist, die zum Zusammenwirken mit der zweiten Schnittstelle (202) vorgesehen ist, um die Befestigung der Basis (302) auf der Außenfläche zu gewährleisten, und
- ein Gehäuse (304), in dem mindestens die folgenden elektronischen Bauteile aufgenommen sind: eine Steuereinheit, ein Funksender, der in der Lage ist, ein Funknotsignal auszugeben, sowie Detektionsmittel, die dazu vorgesehen sind, ein anormales Verhalten des Luftfahrzeugs (10) zu detektieren, und
- Befestigungsmittel (306), die dazu vorgesehen sind, eine Befestigungsposition, in der die Befestigungsmittel (306) die Befestigung des Gehäuses (304) auf der Basis (302) gewährleisten, oder eine Trennposition, in der die Befestigungsmittel (306) die Befestigung des Gehäuses (304) auf der Basis (302) nicht gewährleisten, einzunehmen, wobei der Übergang aus der Befestigungsposition in die Trennposition von der Steuereinheit gesteuert wird, wenn die Detektionsmittel ein anormales Verhalten detektieren,
**dadurch gekennzeichnet, dass** es sich bei der zweiten Schnittstelle (202) um eine physische Schnittstelle zur Aufnahme einer Navigationslampe handelt, wobei es sich bei der ersten Schnittstelle (308) um eine der physischen Schnittstelle der Navigationslampe ähnliche physische Schnittstelle handelt und wobei die Basis (302) eine zur Aufnahme einer Navigationslampe vorgesehene Montageschnittstelle (310) umfasst.

2. Luftfahrzeug (10) nach Anspruch 1, **dadurch gekennzeichnet, dass** das Gehäuse (304) eine Energiequelle umfasst.

3. Luftfahrzeug (10) gemäß einem der Ansprüche 1 oder 2, **dadurch gekennzeichnet, dass** das Gehäuse (304) mit einem aufblasbaren Kissen versehen ist, das dazu vorgesehen ist, um das Gehäuse (304) herum aufgeblasen zu werden.

4. Luftfahrzeug (10) gemäß einem der Ansprüche 1 bis 3, **dadurch gekennzeichnet, dass** das Gehäuse (304) einen Fallschirm umfasst, der dazu vorgesehen ist, sich unter Steurung der Steureinheit nach dem Auslösen der Befestigungsmittel aus der Befestigungsposition in die Trennposition zu öffnen.

5. Luftfahrzeug (10) gemäß einem der Ansprüche 1 bis 4, **dadurch gekennzeichnet, dass** es ein elektrisches Netz umfasst, das zum Speisen der elektronischen Bauteile über eine im Luftfahrzeug (10) befindliche Energiequelle vorgesehen ist.

6. Luftfahrzeug (10) gemäß einem der vorhergehenden Ansprüche, **dadurch gekennzeichnet, dass** der oder mindestens einer der Notsignalsender (200) im hinteren Bereich des Rumpfes (100) angeordnet ist.

7. Luftfahrzeug (10) gemäß einem der vorhergehenden Ansprüche, **dadurch gekennzeichnet, dass**
- die Steuereinheit einen Speicherbereich, in dem eine Karte der Erde gespeichert ist, und eine Datenbank umfasst, die die Sicherheitsgrenzwerte in Bezug auf die Parameter des Luftfahrzeugs (10), die auf der Karte basieren, erfasst, und dass
- die Steuereinheit Software zur Datenverarbeitung umfasst, die dazu konfiguriert ist, die von den Detektionsmitteln übertragenen Daten mit den Daten aus der Datenbank zu vergleichen und basierend auf die Befestigungsmittel (306) diesen Vergleichen auszulösen.

8. Luftfahrzeug (10) gemäß einem der vorhergehenden Ansprüche, **dadurch gekennzeichnet, dass** die Steuereinheit (400) eine erste Untereinheit (402) und eine zweite Untereinheit (404) umfasst, und dass jede Untereinheit (402, 404) Folgendes umfasst:
- ein erstes Modul (406a-b), das zur Ausgabe eines ersten elektrischen Signals über eine erste Kabelverbindung (410a-b) an die Befestigungsmittel (306) vongesehen ist, und
- ein zweites Modul (408a-b), das zur Ausgabe eines zweiten elektrischen Signals über eine zweite Kabelverbindung (412a-b) an die Befestigungsmittel (306) vongesehen ist, und
- dass für jedes Modul (406a-b, 408a-b) Detektionsmittel vorgesehen sind, die mit dem Modul (406a-b, 408a-b) verbunden sind und sich von den Detektionsmitteln der anderen Module (406a-b, 408a-b) unterscheiden.

## Claims

1. Aircraft (10) comprising:
- a fuselage (100) having an outer face on which is fixed a second interface (202),
- at least one emergency beacon (200) comprising:
- a base (302) having a first interface (308) designed to cooperate with said second interface (202) in order to ensure the fixing of the base (302) onto said outer face, and
- a casing (304) in which are housed at least the following electronic components: a control unit, a radio transmitter suitable for transmitting a distress radio signal and detection means designed to detect an abnormal behavior of the aircraft (10), and
- fixing means (306) designed to take up a fixing position in which the fixing means (306) ensure the fixing of the casing (304) onto the base (302) or a position of separation, in which the fixing means (306) do not ensure the fixing of the casing (304) onto the base (302), the transition from the fixing position to the position of separation being ordered by said control unit when the detection means detect an abnormal behavior,
**characterized in that** the second interface (202) is a physical interface designed to receive a navigation lamp, in which the first interface (308) is a physical interface similar to the physical interface of said navigation lamp and in which the base (302) comprises a mounting interface (310) designed to receive a navigation lamp.

2. Aircraft (10) according to Claim 1, **characterized in that** the casing (304) comprises an electrical energy source.

3. Aircraft (10) according to either of Claims 1 and 2, **characterized in that** the casing (304) is equipped with an inflatable cushion designed to inflate around the casing (304).

4. Aircraft (10) according to one of Claims 1 to 3, **characterized in that** the casing (304) comprises a parachute designed to be deployed under the control of the control unit after a triggering of the fixing means from the fixing position to the position of separation.

5. Aircraft (10) according to one of Claims 1 to 4, **characterized in that** it comprises an electrical network designed to power the electronic components from an energy source located in the aircraft (10).

6. Aircraft (10) according to one of the preceding claims, **characterized in that** the or at least one of the emergency beacons (200) is arranged at the rear of the fuselage (100).

7. Aircraft (10) according to one of the preceding claims, **characterized in that**
- the control unit comprises a memory area in which is stored a mapping of the Earth and a database which lists safety threshold values linked to parameters of the aircraft (10) and that are based on the mapping, and **in that**
- the control unit comprises data processing software configured for comparing the data transmitted by the detection means to the database data, and for triggering the fixing means (306) based on these comparisons.

8. Aircraft (10) according to one of the preceding claims, **characterized in that** the control unit (400) comprises a first subunit (402) and a second subunit (404), **in that** each subunit (402, 404) comprises:
- a first module (406a-b) designed to deliver a first electrical signal to the fixing means (306) through a first wired connection (410a-b), and
- a second module (408a-b) designed to deliver a second electrical signal to the fixing means (306) through a second wired connection (412a-b), and
**in that**, for each module (406a-b, 408a-b), detection means are provided that are connected to said module (406a-b, 408a-b) and that are different from the detection means of the other modules (406a-b, 408a-b).
